# EUROPEAN PATENT APPLICATION

(11) **EP 4 398 395 A1**
(43) Date of publication of application: **10.07.2024**
(21) Application number: 23843262.9
(22) Date of filing: 12.07.2023
(51) Int. Cl.: H01M 50/262, H01M 50/249, H01M 50/209, H01M 50/256

(54) **BATTERY PACK AND DEVICE INCLUDING SAME**

(30) Priority: 20.07.2022 KR 20220089943; 11.07.2023 KR 20230090047
(71) Applicant: LG Energy Solution, Ltd., Seoul 07335 (KR)
(72) Inventor: PARK, Jin Yong, Daejeon 34122 (KR); KWON, Wooyong, Daejeon 34122 (KR); YOON, Hyunmo, Daejeon 34122 (KR); CHI, Ho June, Daejeon 34122 (KR); KIM, Seung Joon, Daejeon 34122 (KR); JUNG, Seyun, Daejeon 34122 (KR); LEE, Myungwoo, Daejeon 34122 (KR); KIM, Insoo, Daejeon 34122 (KR)
(74) Representative: Plasseraud IP
(86) International application number: PCT/KR2023/009955
(87) International publication number: WO 2024/019412

(57) **Abstract**

A battery pack according to an embodiment of the present invention includes a battery assembly including a plurality of cell units arranged side by side in one direction, and a pack case that houses the battery assembly in an inner space thereof, wherein the cell unit includes at least one battery cell and a cell cover covering a part of the battery cell, and wherein the battery assembly includes a fixing unit penetrating through the cell cover to thereby restrict a relative movement of the plurality of cell units.

## Description

### (TECHNICAL FIELD]

### Cross Citation with Related Application(s)

This application claims priority benefit of Korean Patent Application No. 10-2022-0089943 filed on July 20, 2022 and Korean Patent Application No. 10-2023-0090047 filed on July 11, 2023 in the Korean Intellectual Property Office, the content of each of which is incorporated herein by reference in their entireties.

The present invention relates to a battery pack and a device including the same, and more particularly, a battery pack manufactured by a cell-to-pack technology, and a device including the same.

### (BACKGROUND]

Secondary batteries have attracted considerable attention as an energy source for power-driven devices, such as an electric bicycle, an electric vehicle, and a hybrid electric vehicle, as well as an energy source for mobile devices, such as a mobile phone, a digital camera, and a laptop computer. In this regard, the demand for secondary batteries as energy sources has been rapidly increasing.

In recent years, battery packs have been widely used for the driving or energy storage of middle or large-sized devices such as electric vehicles or energy storage systems. A conventional battery pack includes one or more battery modules inside the pack case and a control unit such as a BMS (Battery Management System) that controls the charging and discharging of battery packs. Here, the battery module is configured so as to include a large number of battery cells inside a module case. That is, in the case of a conventional battery pack, a large number of battery cells (secondary batteries) are housed inside a module case to configure each battery module, and one or more of such battery modules are housed inside a pack case to configure a battery pack.

However, as disclosed in the prior literature (Korean Patent Registration No. 10-2379227), and the like, such assembling method for a battery has a problem of increasing the overall weight and volume of the battery pack and lowering the energy density of the battery pack.

In addition, in order to increase the energy density of the battery pack, when the conventional cell-to-pack technology in which a large number of battery cells are directly attached to a pack case of the battery pack is applied to a pouch type battery cell having a soft case, it is difficult to handle or stack a large numbers of battery cells at the same time, and there is a risk that the battery cells will be damaged during the process of mounting the battery cells to the pack case.

### (DETAILED DESCRIPTION OF THE INVENTION]

### [Technical Problem]

Therefore, the present invention has been designed to solve the problems as above, and an object of the present invention is to provide a battery pack, a device, and the like, which reduce the overall weight and volume of the battery pack and improve the energy density of the battery pack.

Another object of the present invention is to provide a battery pack which facilitates handling and mounting of battery cells in the manufacturing process of a battery pack including a plurality of battery cells, accomplishes simplification and weight reduction of the structure required for mounting battery cells while preventing damage to the battery cells, thereby reducing manufacturing costs and strengthening the fixing force of the battery cells, and a device including the same.

### (Technical Solution]

According to one embodiment of the present invention, there is provided a battery pack comprising: a battery assembly including a plurality of cell units arranged side by side in one direction, and a pack case that houses the battery assembly in an inner space, wherein the cell unit includes at least one battery cell and a cell cover covering a part of the battery cell, and wherein the battery assembly penetrates through the cell cover to thereby restrict a relative movement of the plurality of cell units.

The cell cover is formed with a cell cover fastening hole, and the fixing unit may penetrate through the cell cover fastening hole to thereby fix the plurality of cell units.

The battery cells are vertically arranged so that one edge corresponds to the bottom surface of the pack case, the cell cover covers an upper side edge of the vertically arranged battery cell, and the lower side edge of the battery cell may be opened.

The cell cover includes a second surface and a third surface arranged in parallel to one surface of the battery cell, and a first surface extending between the second surface and the third surface, and a cross section of the cell cover may have an n-shape.

The second surface and the third surface may be formed with a cell unit coupling hole into which the fixing unit is inserted.

The cell unit further includes a busbar frame coupled to an end part in the longitudinal direction of the cell cover, and an electrode lead of the battery cell housed in the cell cover may be electrically connected to a busbar mounted on the busbar frame.

One surface of the busbar frame is formed with a busbar frame groove, and the shape of the busbar frame groove may correspond to the shape of the outer peripheral surface of the fixing unit.

The battery assembly includes a support plate in contact with one surface of an outermost cell unit among the plurality of cell units, and the fixing unit may penetrate through the support plate to thereby restrict a relative movement between the plurality of cell units and the support plate.

The support plate is formed with a plate fastening hole, the cell cover is formed with a cell cover fastening hole, and the fixing unit may penetrate through the plate fastening hole and the cell cover fastening hole to thereby couple the plurality of cell units and the support plate.

The battery assembly further includes an end cover located at an end part in a longitudinal direction of the plurality of cell units, and the end cover may be coupled to the support plate.

The end cover includes a body part covering end parts in the longitudinal direction of the plurality of cell units, and a cover extension part extending from one edge of the body part toward the support plate, and the cover extension part may correspond to an end part in the longitudinal direction of the support plate.

The fixing unit may penetrate through the cover extension part to thereby couple the end cover and the support plate.

The cell cover is formed with a cell cover fastening hole, the support plate is formed with a plate fastening hole, the cover extension part is formed with a cover fastening hole, the fixing unit may penetrate through the cell cover fastening hole, the plate fastening hole, and the cover fastening hole to thereby couple the plurality of cell units, the support plate, and the end cover.

The battery assembly further includes a second fixing unit, and the cover extension part and an end part of the support plate may be fixed by the second fixing unit.

The support plate is formed with a second plate fastening hole, the cover extension part is formed with a cover fastening hole, and the second fixing unit may penetrate through the second plate fastening hole and the cover fastening hole to thereby couple the end cover and the support plate.

The support plate is formed with a cover coupling part at a position corresponding to the cover extension part, and an outer surface of the cover coupling part and an inner surface of the cover extension part may be arranged to contact each other.

The outer surface of the cover coupling part has a shape recessed toward the inner surface, and an inner surface of the cover extension part may be disposed on an outer surface of the recessed cover coupling part.

The end cover may include a cover support part extending from one edge of the body part toward a lower surface of the cell unit.

The cell cover may be formed by bending one plate material.

According to another embodiment of the present invention, there is provided a device comprising the above-mentioned battery pack.

### (Advantageous Effects]

According to one aspect of the present invention, instead of housing a large number of battery cells in a separate module case and mounting them on a pack case of the battery pack, they are partially covered by a cell cover having a simplified structure, and can be directly mounted on the pack case. This not only reduces the overall weight and volume of the battery pack and improves the energy density of the battery pack, but also prevents damage to the battery cells occurring in the process of directly mounting a large number of battery cells and using them, and facilitates swelling control of the battery cells and design of the gas venting path.

In addition, the cell units each including at least one battery cell are blocked and fixed to a pair of support plates and a fixing unit penetrating through the cell units, which facilitates handling and mounting of battery cells in the manufacturing process of a battery pack including a plurality of battery cells, accomplishes simplification and weight reduction of the structure required for mounting battery cells, thereby reducing the manufacturing costs and strengthening the fixing force of the battery cells.

Besides, the present invention can have additional other effects, which will be described in each of embodiments, or descriptions of the effects that can be easily inferred by those skilled in the art will be omitted.

### [BRIEF DESCRIPTION OF THE DRAWINGS]

FIG. 1 is a diagram showing a battery pack according to an embodiment of the present invention;
FIG. 2 is a view showing a battery assembly according to an embodiment of the present invention;
FIG. 3 is an exploded perspective view of the battery assembly according to FIG. 2;
FIG. 4 is a diagram showing a cell unit according to an embodiment of the present invention;
FIG. 5 is an exploded perspective view of the cell unit according to FIG. 4;
FIG. 6 is an enlarged view of a section P1 of FIG. 2;
FIGS. 7 and 8 are modifications of a battery assembly according to an embodiment of the present invention;
FIG. 9 is another modification of a battery assembly according to an embodiment of the present invention; and
FIG. 10 is a diagram showing a state in which a battery pack according to an embodiment of the present invention is mounted on a vehicle.

### [DETAILED DESCRIPTION OF THE EMBODIMENTS]

Hereinafter, preferred embodiments of the present invention will be described in detail with reference to the accompanying drawings. The terms or words used in the present specification and claims should not be interpreted as being limited to typical meanings or dictionary definitions, but should be interpreted as having meanings and concepts relevant to the technical scope of the present invention based on the rule according to which an inventor can appropriately define the concept of the terms to describe the best method he or she knows carrying out the invention. Therefore, embodiments described in the specification and the configurations shown in the drawings are not more than the most exemplary embodiments of the present invention and do not fully cover the spirit of the present invention. Accordingly, it should be understood that there may be various equivalents and modifications that can replace those when this application is filed.

In the drawings, the dimension of each of components or a specific portion constituting the component is exaggerated, omitted, or schematically illustrated for convenience in description and clarity. Thus, the dimension of each component does not entirely reflect an actual size. Moreover, detailed descriptions related to well-known functions or configurations may be omitted in order to avoid unnecessarily obscuring the subject matters of the present invention.

In addition, it will be understood that when an element such as a layer, film, region, or plate is referred to as being formed or disposed "on" or "above" another element, it should be interpreted as including not only a case where an element such as a layer, film, region, or plate is directly on the other element but also a case where intervening elements are present. In contrast, when an element such as a layer, film, region, or plate is referred to as being formed or disposed "directly on" another element, it may mean that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being formed or disposed "on" or "above" another part, the case where it is described as being formed or disposed "below" or "under" another element will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, a battery pack according to an embodiment of the present invention will be described.

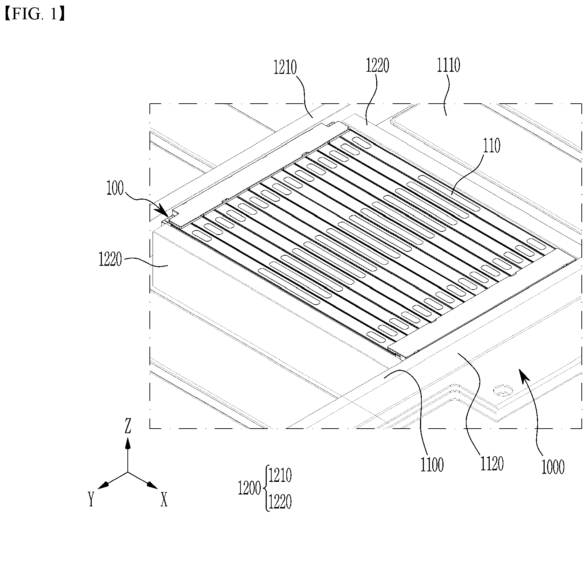

FIG. 1 is a diagram showing a battery pack according to an embodiment of the present invention.

Referring to FIG. 1, the battery pack 1000 according to the present embodiment may comprise at least one battery assembly 100 and a pack case 1100 that houses the battery assembly 100 and protects the battery assembly from an external environment.

The pack case 1100 has a space for seating each battery assembly 100, and each battery assembly 100 may be housed in a seating space of the pack case 1100.

The pack case 1100 can serve to protect the battery cell 111 from an external environment. The pack case 1100 may include a bottom surface 1110 and a side surface 1120 extending vertically from one corner of the bottom surface 1110, so that a plurality of battery cells 111 can be housed in an inner space formed thereby. In addition, the pack case 1100 may further include an upper surface that is parallel to the bottom surface 1110 and coupled to the side surface 1120. However, the structure of the pack case 1100 is not limited by the contents described above, and the pack case 1100 may be designed so as to have various structures for achieving the purpose of protecting the battery cell 111.

The pack case 1100 may comprise a cross beam 1200 that partitions the seating space described above. The battery assembly 100 mounted in the seating space may be prevented from being spaced apart or having a margin interval by the cross beam 1200. Forward/backward and right/left movement of the battery assembly 100 can be minimized by the cross beam 1200, thereby preventing damage of the battery assembly 100 due to external vibration and impact.

The cross beam 1200 may comprise a first beam 1210 and a second beam 1220 that are installed perpendicular to each other. The first beam 1210 and the second beam 1220 may be arranged to be spaced apart from each other or arranged to intersect each other, thereby forming the plurality of seating spaces.

As a specific example, the battery assembly 100 may be arranged in two rows inside the pack case 1100, and the first beam 1210 may be arranged across the central part of the pack case 1100 to separate the battery assemblies 100 arranged in two rows. The second beam 1220 may be arranged perpendicular to the first beam 1210 to separate the battery assemblies 100 arranged in each row, and may be arranged in plural numbers at regular intervals. However, this is an example of the internal structure of the battery pack 1000, and the structure of the battery pack 1000 according to the present embodiment should not be limited to the examples mentioned above.

Meanwhile, as mentioned above, the battery assembly 100 of the present embodiment may be provided without a separate case protecting the outer surface of the battery assembly 100.

That is, the battery assembly 100 of the present embodiment may have a module-less structure. Here, the module-less structure may refer to a cell-to-pack structure in which a cell structure is directly coupled to a pack structure without a module case.

Typically, conventional battery packs 1000 have a double assembly structure in which a plurality of battery cells and several components connected thereto are assembled to form a battery module, and the plurality of battery modules are housed in the battery pack 1000 again. At this time, since the battery module comprises a module frame or the like that forms its outer surface, conventional battery cells are doubly protected by the module frame of the battery module and the pack case 1100 of the battery pack 1000. However, such a double assembly structure not only increases the manufacturing unit cost and the manufacturing process of the battery pack 1000, but also has a disadvantage that reassembly performance is deteriorated when defects occur in some battery cells. Further, when the cooling member or the like exists outside the battery module, there is a problem that a heat transfer path between the battery cell and the cooling member becomes slightly complicated.

Thus, the unit module mounted on the battery pack 1000 in this embodiment can be provided in the form of a 'battery assembly' in which the module frame is omitted. Thereby, the structure of the battery pack 1000 can be simplified, advantages in terms of manufacturing cost and manufacturing process can be obtained, and weight reduction of the battery pack 1000 can be achieved.

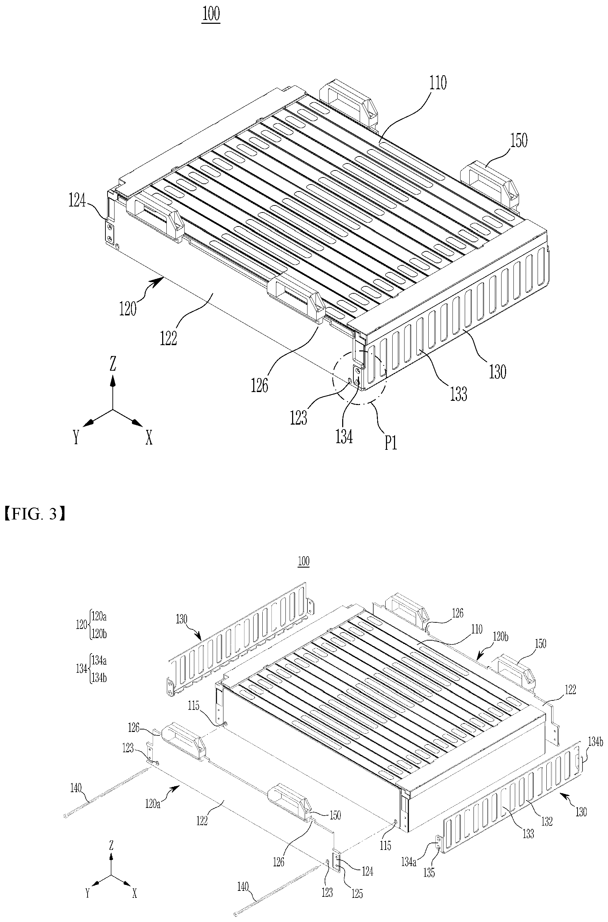

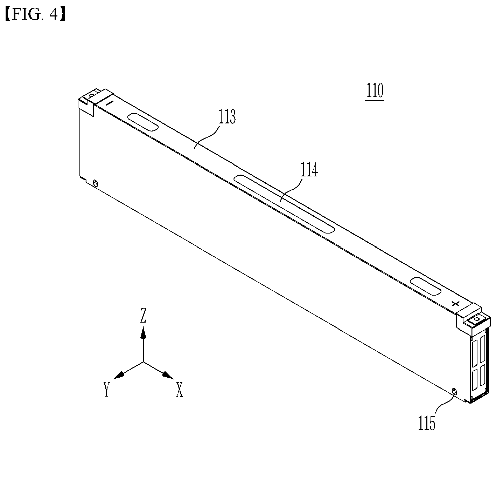

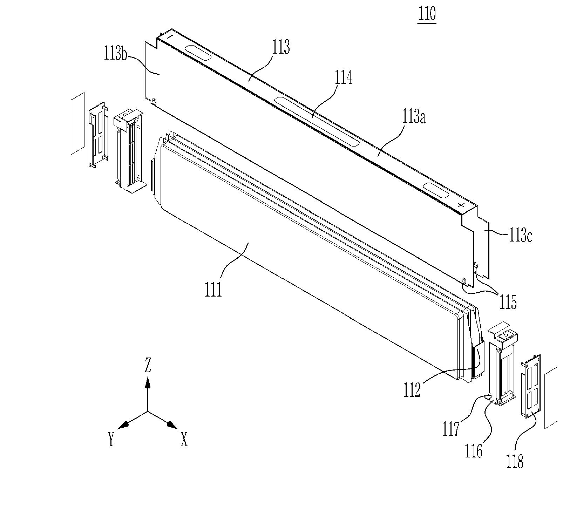

FIG. 2 is a view showing a battery assembly according to an embodiment of the present invention. FIG. 3 is an exploded perspective view of the battery assembly according to FIG. 2. FIG. 4 is a diagram showing a cell unit according to an embodiment of the present invention. FIG. 5 is an exploded perspective view of the cell unit according to FIG. 4.

Referring to FIGS. 2 and 3, the battery assembly 100 of the present embodiment may comprise a plurality of cell units 110, a support plate 120 that supports one surface of the cell unit 110 located on the outermost side among the plurality of cell units 110, an end cover 130 that covers a front surface and a rear surface of the plurality of cell units 110, and a fixed unit 140 that mutually couples the plurality of cell units 110. In addition, the battery assembly 100 of this embodiment may further comprise a handle unit 150.

The cell unit 110 may be a minimum unit body that protects the battery cell 111 (see FIG. 4). The cell unit 110 may include at least one battery cell 111 and a cell cover 113 (see FIG. 4 ) covering a part of the battery cell 111.

As mentioned above, in the present embodiment, instead of mounting a plurality of battery cells 111 in a separate module case and mounting them on the pack case 1100 of the battery pack 1000, they can be directly mounted on the pack case 1100 while being partially covered by a cell cover 113 having a simplified structure. Through this structure of the cell unit 110, the overall weight and volume of the battery pack 1000 can be reduced, and the energy density of the battery pack 1000 can be improved. In addition, it is possible to prevent damage of the battery cells 111 occurring in the process of directly mounting the plurality of battery cells 111 on the case or using them, and facilitate the swelling control of the battery cells and the design of the gas venting path.

On the other hand, prior to the description, the cell unit 110 may have a hexahedral shape having horizontal (length), vertical (width), and thickness, wherein the longitudinal direction may be the X axis, the widthwise direction may be the Z axis, and the thickness direction may be the Y axis. The plurality of cell units 110 may be arranged successively along the thickness direction (Y-axis direction), and the thickness direction (Y-axis direction) may be referred to as a stacking direction of the cell unit 110.

Here, the two surfaces facing each other in the longitudinal direction (X-axis direction) of the cell unit 110 are referred to as a front surface and a rear surface, two surfaces facing each other in the thickness direction (Y-axis direction) of the cell unit 110 are referred to as side surfaces, and two surfaces facing each other in the widthwise direction (Z-axis direction) of the cell unit 110 may be referred to as an upper surface and a lower surface.

The cell unit 110 may be formed in plural numbers, and the plurality of cell units 110 may be arranged side by side in one direction. The cell units 110 may be stacked in one direction and housed in the pack case 1100. The cell units 110 may be arranged successively such that the side surfaces thereof and the side surfaces of adjacent cell units 110 are parallel to each other.

The cell unit 110 may be arranged in upright along the Z-axis direction such that its side surface is perpendicular to the pack case 1100. The cell unit 110 may be arranged such that its lower surface corresponds to the bottom surface 1110 of the pack case 1100.

The details regarding the cell unit 110 will be described in detail below with reference to FIGS. 4 and 5.

The support plate 120 can maintain the overall shape of the stacked cell units 110. The support plate 120 can support the stacked cell units 110. In the battery pack 1000, the cell unit 110 may be arranged such that one surface thereof is perpendicular to the bottom surface 1110 of the battery pack 1000, and the support plate 120 may support one surface of the cell unit 110 so that the one surface thereof can maintain an upright state. The support plate 120 can prevent the plurality of cell units 110 from being spaced apart from each other, thereby fixing a relative positions between the cell units 110. The support plate 120 may be a plate-shaped member and can supplement the stiffness of the battery assembly 100 instead of the module frame.

The support plate 120 can be arranged on one surface of the outermost cell unit 110 among the stacked cell units 110. The support plate 120 may be arranged on a side surface of the outermost cell unit 110 among the stacked cell units 110.

Here, the support plate 120 provided in the battery assembly 100 of this embodiment may be formed in two. The support plate 120 may comprise a first support plate 120a and a second support plate 120b. A pair of support plates 120 may be provided at both ends in the stacking direction of the stacked cell units 110. The first support plate 120a contacts with the outermost cell unit 110 on one side of the stacked cell units 110, and the second support plate 120b may contact with the outermost cell unit 110 on the other side of the stacked cell units 110.

Meanwhile, as will be described later, the cell cover 113 included in the cell unit 110 may have a second surface 113b (see FIG. 5) and a third surface 113c (see FIG. 5) that are arranged in parallel to each other, and a first surface 113a (see FIG. 5) that extends between the second surface 113b and the third surface 113c. At this time, an inner surface of the first support plate 120a may contact an outer surface of the second surface 113b of the outermost cell unit 110 on one side. An inner surface of the second support plate 120b may contact an outer surface of the third surface 113c of the outermost cell unit 110 on the other side.

The support plate 120 can be made of various materials, and can be provided by various manufacturing methods. As an example, the support plate 120 may be made of a metal material, and an example of the metal material may be aluminum. As another example, the support plate 120 may be made from a combination of aluminum and polymer synthetic resin through insert molding. However, the material and manufacturing method of the support plate 120 should not be limited by the contents described above, and can include various materials not mentioned or be manufactured by other manufacturing methods.

The support plate 120 may include a support part 122 that supports the cell unit 110, a cover coupling part 124 for coupling with the end cover 130, and a handle coupling part 126 for coupling with the handle unit 150.

The support part 122 corresponds to the majority of the area of the support plate 120, and may have a plate-like shape so as to support the cell unit 110. The support part 122 may have a shape similar to the side surface shape of the cell unit 110. The plate-shaped support part 122 may include both side edges in the longitudinal direction (X-axis direction) and in the widthwise direction (Z-axis direction).

Meanwhile, the support plate 120 and the plurality of cell units 110 are coupled by the fixing unit 140, thereby being able to restrict relative positional movement. For this purpose, the support part 122 may be formed with a plate fastening hole 123 into which the fixing unit 140 is inserted. As will be described later, the plate fastening hole 123 may be formed at a position corresponding to the cell unit fastening hole 115 of the cell cover 113 included in the cell unit 110 (see FIG. 4). The plate fastening hole 123 may be located close to an end part in the longitudinal direction (X-axis direction) of the support plate 120. This can be for preventing the battery cell 111 from being damaged by the fixing unit 140 penetrating through the support plate 120 and the cell cover 113 included in the cell unit 110.

The number of the plate fastening hole 123 formed in the support plate 120 may be one. However, in order to stably couple the plurality of cell units 110 and the support plate 120, the fixing unit 140 is preferably formed in plural numbers, so that a plurality of plate fastening holes 123 can be formed in the support plate 120. As a specific example, the fixing unit 140 provided in the battery assembly 100 may be formed in two, and the plate fastening holes 123 may be formed at portions close to both ends in the longitudinal direction (X-axis direction) of the support plate 120. When the plate fastening hole 123 is formed in plural numbers, the cell unit fastening holes 115 in each cell cover 113 may also be formed in plural numbers. At this time, the plurality of plate fastening holes 123 and the plurality of cell unit fastening holes 115 formed in each cell cover 113 may correspond to each other.

The cover coupling part 124 may provide a coupling surface between the support plate 120 and the end cover 130. The cover coupling part 124 may have a shape extending from one edge of the support part 122.

The cover coupling part 124 may be formed at one edge corresponding to the end cover 130 among the edges of the support part 122. The end cover 130 can be arranged close to the end part in the longitudinal direction (X-axis direction) of the support plate 120, and the cover coupling part 124 can be formed at an edge in the longitudinal direction (X-axis direction) of the support part 122 to provide a coupling surface with the end cover 130. The cover coupling part 124 may have a shape extending toward the end cover 130 from an edge in the longitudinal direction (X-axis direction) of the support part 122. The cover coupling part 124 may have a shape extending in parallel to one surface of the support part 122. At this time, the end cover 130 may be arranged such that an end part in the longitudinal direction (Y-axis direction) corresponds to an end part in the longitudinal direction (X-axis direction) of the support plate 120.

The number of the cover coupling part 124 formed in one support plate 120 may be two. The cover coupling parts 124 may be located at each of two edges of the support parts 122 facing each other. As a more specific example, the end covers 130 may be formed in two, and the two end covers 130 may be arranged so as to correspond to end parts in the longitudinal direction (X-axis direction) of one support plate 120. The cover coupling part 124 is formed at each of both edges in the longitudinal direction (X-axis direction) of the support part 122, and the two cover coupling parts 124 may respectively correspond to the two end covers 130. The cover coupling part 124 located at one end part in the longitudinal direction (X-axis direction) of the support plate 120 may correspond to one end cover 130, and the cover coupling part 124 located at the other end part may correspond to the other end cover 130. In this manner, the cover coupling part 124 may be formed in plural numbers on the support part 122, and each cover coupling part 124 may be coupled to a cover extension part 134 formed on each end cover 130.

On the other hand, the support plates 120 provided to the battery assembly 100 may be formed in two, wherein one end part and the other end part in the longitudinal direction (X-axis direction) of the pair of support plates 120 may respectively correspond to one end part and the other end part in the longitudinal direction (Y-axis direction) of the pair of end covers 130. Thereby, one end part in the longitudinal direction (Y-axis direction) of the end cover 130 may correspond to the cover coupling part 124 formed on the first support plate 120a, and the other end part may correspond to the cover coupling part 124 formed on the second support plate 120b.

The cover coupling part 124 may be formed with a second plate fastening hole 125 for coupling with the end cover 130. The number of the second plate fastening hole 125 may be one, or two or more. As an example, the number of the second plate fastening hole 125 may be one. In this case, the coupling stability of the end cover 130 can be supplemented according to the shape of the end cover 130 or the shape of other members. Specifically, the end cover 130 may be rotated about the second plate fastening hole 125 as a central axis, but this phenomenon can be prevented by the cover support 136 of the end cover 130 and other configurations. Further, when the number of the second plate fastening hole 125 is one, the manufacturing costs can be reduced and the manufacturing process can be simplified. Further, as another example, the second plate fastening hole 125 may be formed in two. In such a case, the reliability of coupling of the end cover 130 can be improved.

The handle coupling part 126 may provide a coupling surface between the support plate 120 and the handle unit 150. The handle coupling part 126 can be coupled to at least one handle unit 150.

Here, the handle unit 150 can stably seat the battery assembly 100 inside the pack case 1100, and may include a handle that can be gripped by a user. One end part of the handle unit 150 may be detachably coupled to the support plate 120, and the handle unit can be removed from the support plate 120 after the mounting of the battery assembly 100 is completed.

The handle coupling part 126 may be formed in a shape extending from one edge of the support part 122. The handle coupling part 126 may be located at one end part in the widthwise direction (Z-axis direction) of the support part 122. More specifically, it may be located on the upper side (+Z) based on the state in which the battery assembly 100 is mounted. This may facilitate removal of the handle unit 150 after the mounting of the battery assembly 100 is completed.

The end cover 130 can serve to protect the front surface or the rear surface of the plurality of cell units 110. The end cover 130 can cover the front surface or the rear surface of the plurality of cell units 110. The end cover 130 may be located at end parts in the longitudinal direction of the stacked cell units 110. The end covers 130 may be formed two, and the two end covers 130 may be respectively provided at both end parts in the longitudinal direction of the stacked cell units 110.

The end cover 130 may integrally cover the terminal portions of the battery cells included in the plurality of cell units 110. The end cover 130 may comprise body parts 132 corresponding to electrode lead parts of the battery cells included in the plurality of cell units 110, a cover extension part 134 that extends vertically from one edge of the body part 132 and couples to the support plate 120, and a cover support part 136 that extends vertically from the other edge of the body part 132 and supports a part of the cell unit 110.

The body part 132 can cover a front surface or a rear surface of the plurality of cell units 110. The body part 132 may be located at an end part in the longitudinal direction of the plurality of cell units 110. The body part 132 may cover the end parts in the longitudinal direction of the plurality of cell units 110. The body part 132 may cover terminal portions of the battery cells included in the plurality of cell units 110. Here, the body part 132 may also be referred to as a 'terminal cover part'.

The body part 132 may have a nearly plate shape. The plate-shaped body part 132 may include both edges in the longitudinal direction (Y-axis direction) and both edges in the widthwise direction (Z-axis direction).

The body part 132 may be formed with a cover venting hole 133. The cover venting hole 133 may be formed in plural numbers, and the plurality of the cover venting holes 133 may correspond to each cell unit 110. However, each cover venting hole 133 does not necessarily have to correspond to one cell unit 110, and a plurality of cover venting holes 133 can correspond to one cell unit 110, or a plurality of cell units 110 can correspond to one cover venting hole 133. The end cover 130 can protect the cell unit 110 from an external environment by the cover venting hole 133 and also discharge gas or the like generated from the battery cell 111 to the outside. Thereby, a cascading thermal runaway phenomenon of the battery assembly 100 can be prevented.

The cover extension part 134 can provide a coupling surface for coupling between the end cover 130 and the support plate 120.

The cover extension part 134 may be formed at one edge corresponding to the support plate 120 among the edges of the body part 132. The support plate 120 may be arranged close to the end part in the longitudinal direction (Y-axis direction) of the end cover 130, and the cover extension part 134 may be formed at an edge in the longitudinal direction (Y-axis direction) of the body part 132 to provide a coupling surface with the support plate 120. The cover extension part 134 may have a shape extending from one edge of the body 132 toward the support plate 120. The cover extension part 134 may have a shape extending from one edge of the body 132 toward the support plate 120 in a direction perpendicular to one surface of the body 132. At this time, the end cover 130 may be located at the end part in the longitudinal direction (X-axis direction) of the support plate 120. The end cover 130 may be arranged such that the end part in the longitudinal direction (Y-axis direction) corresponds to the end part in the longitudinal direction (X-axis direction) of the support plate 120.

The cover extension part 134 may correspond to an end part in the longitudinal direction (X-axis direction) of the support plate 120. The cover extension part 134 may overlap an end part in the longitudinal direction (X-axis direction) of the support plate 120. The cover extension part 134 may be located outside the end part in the longitudinal direction (X-axis direction) of the support plate 120. The cover extension part 134 may be coupled to an end part in the longitudinal direction (X-axis direction) of the support plate 120.

The number of the cover extension parts 134 formed on one end cover 130 may be two. The two cover extension parts 134 may include a first cover extension part 134a and a second cover extension part 134b that are respectively formed on two edges of the body part 132 facing each other. The first cover extension part 134a and the second cover extension part 134b may be formed at both edges in the longitudinal direction (Y-axis direction) of the body part 132.

More specifically, the first support plate 120a and the second support plate 120b may be located to correspond to both end parts in the longitudinal direction (Y-axis direction) of the end cover 130. The first cover extension part 134a located at one end part in the longitudinal direction (Y-axis direction) of the end cover 130 may correspond to the first support plate 120a, and the second cover extension part 134b located at the other end part may correspond to the second support plate 120b. The first cover extension part 134a and the second cover extension part 134b may have a shape extending perpendicularly to one surface of the body part 132 toward the first support plate 120a and the second support plate 120b. The first cover extension part 134a and the second cover extension part 134b may respectively correspond to end parts of the first support plate 120a and the second support plate 120b. The first cover extension part 134a and the second cover extension part 134b can be respectively overlapped and coupled with end parts of the first support plate 120a and the second support plate 120b. The first cover extension part 134a may be located outside the first support plate 120a, and the second cover extension part 134b may be located outside the second support plate 120b. Here, the outer side of a specific member may be described on the basis of the center of the battery assembly 100. In addition, as will be described later, the first cover extension part 134a and the second cover extension part 134b can respectively correspond to the cover coupling parts 124 formed on the first support plate 120a and the second support plate 120b.

The cover extension part 134 may correspond to the cover coupling part 124 of the support plate 120. The cover extension part 134 may overlap with the cover coupling part 124. The cover extension part 134 may be coupled to the cover coupling part 124 of the support plate 120. More specifically, the cover extension part 134 may be located outside the cover coupling part 124, and an inner side surface of the cover extension part 134 may contact an outer side surface of the cover coupling part 124.

The outer side surface of the cover coupling part 124 may have a shape recessed toward the inner side surface so that the cover extension part 134 and the cover coupling part 124 can easily overlap each other, and the cover extension part 134 can be seated on the recessed outer side surface. Further, each corner of the cover extension part 134 may have a round shape. Thereby, when the end cover 130 is mounted on the combination of the cell unit 110 and the support plate 120, interference between the support plate 120 and the end cover 130 can be minimized.

On the other hand, conventionally, in order to protect the battery cells from an external environment, a module frame that covers the upper, lower, left and right surfaces of the stacked battery cells and end plates that cover the front and rear surfaces thereof are provided. Also, on the outside of the battery cells, the module frame and the end plate are mainly coupled by welding. However, in this embodiment, by omitting the module frame, the end cover 130 and the support plate 120 are coupled, and the end cover 130 and the support plate 120 are coupled by a fastening member, so that a welding process may not be added. Thereby, the manufacturing process can be completed more easily and quickly. Further, a cover extension part 134 is formed on the end cover 130, and the cover coupling part 124 corresponding thereto is formed on the support plate 120, so that the coupling between the end cover 130 and the support plate 120 can be stably and easily performed.

The cover extension part 134 may be formed with a cover fastening hole 135 for coupling with the support plate 120. The cover fastening hole 135 may correspond to the second plate fastening hole 125 formed in the cover coupling part 124. In the manufacturing process of the battery assembly 100 of this embodiment, the end cover 130 may be arranged to be positioned on the same axis of the cover fastening hole 135 and the second plate fastening hole 125, and the second fixing unit 142 may be inserted into the cover fastening hole 135 and the second plate fastening hole 125, thereby being able to couple the end cover 130 and the support plate 120. Here, the second fixing unit 142 may be a fastening member such as a bolt or a rivet.

The number of the cover fastening hole 135 may be one or two or more. For this information, refer to the description of the second plate fastening hole 125. When the cover fastening hole 135 is formed in plural numbers, the second plate fastening hole 125 may also be formed in plural numbers, and the plurality of cover fastening holes 135 and the second plate fastening holes 125 may correspond to each other.

Meanwhile, the cell units 110 of the present embodiment may be coupled by the fixing unit 140, and the relative movement of the cell unit 110 may be restricted by the fixing unit 140. The fixing unit 140 may couple the support plate 120 and the cell unit 110. The fixing unit 140 may pass through the plate fastening hole 123 formed in the first support plate 120a, then pass through the cell unit fastening hole 115 formed in the cell cover 113 included in the plurality of cell units 110, and pass through the plate fastening hole 123 formed in the second support plate 120b. Thereby, relative movement between the support plate 120 and the cell unit 110 is restricted, and the battery assembly 100 can be blocked.

In this manner, the plurality of cell units 110 can be blocked by the fixing unit 140 and the relative positions of the cell units 110 can be fixed, thereby making the handling of the battery assembly 100 easier. That is, the mounting of the battery cell 111 may be facilitated by the fixing unit 140, and a structure required for mounting the battery cell 111 is simplified, thereby capable of achieving effects such as weight reduction and manufacturing cost reduction.

The fixing unit 140 can be provided in a long bolt shape. The fixing unit 140 may be provided as a long bolt having a sufficient length to penetrate through all of the plurality of cell units 110 included in the battery assembly 100.

On the other hand, the figures show that the fixing unit 140 penetrates through the lower side portion of the battery assembly 100, but this is not necessarily the case. It is also possible to provide at other positions as long as the battery cell 111 and the electrode lead 112 are not damaged. For example, the fixing unit 140 may be provided so as to penetrate through an upper side portion of the battery assembly 100, whereby the positions of the plate fastening hole 123 and the cell unit fastening hole 115 through which the fixing unit 140 penetrates can be adjusted.

Next, the cell unit of this embodiment will be described.

Referring to FIGS. 4 and 5, the cell unit 110 of this embodiment may include a battery cell 111 housed in a state in which the electrode assembly is impregnated with an electrolyte, a cell cover 113 that covers at least a part of the battery cell 111, a busbar frame 116 for guiding the connection between the battery cell 111 and the conductive member, and an insulating cover 118 for protecting the battery cell 111 and the conductive members connected thereto.

The battery cell 111 of the present embodiment is a basic unit for charging and discharging, and can be provided in a pouch type that can maximize the number of stacked cells per unit area. The battery cell 111 provided in a pouch type can be manufactured by housing an electrode assembly including a cathode, an anode and a separator in a cell case, injecting an electrolyte material therein, and then heat-sealing a sealing part of the cell case. However, it is obvious that the battery cell 111 does not necessarily have to be provided in a pouch type, and can be provided in a prismatic, cylindrical or any other various shapes under the level at which a storage capacity required by a device to be mounted in the future is achieved.

The battery cell 111 may include a housing part for housing the electrode assembly, and a sealing part formed at the edge of the battery cell 111 to seal the electrode assembly. In the case of a pouch type battery cell, the battery cell can be manufactured by housing the electrode assembly in the cell case and then sealing the edge of the cell case located outside the electrode assembly. When the battery cell 111 is formed by housing the electrode assembly in the inner space formed by folding the cell case, and then sealing the edges of the opened three surfaces, the sealing part may be formed on three of the four edges of the cell case, wherein the remaining one edge may be referred to as an unsealed part. However, unlike the one described above, it is also possible to heat-seal all four edges of the battery case in order to manufacture the battery cell 111, and in such a case, the sealing part may be formed on all four edges of the battery cell 111.

As shown in FIG. 5, the battery cell 111 may have a hexahedral shape having horizontal (length), vertical (width), and thickness, wherein the longitudinal direction may be the X-axis, the widthwise direction may be the Z-axis, and the thickness direction may be the Y-axis. Based on the hexahedral shape, the battery cell 111 may be described as including two surfaces (surfaces on the XZ plane) corresponding to the housing part and four surfaces located at the edges of the housing part. However, in the case of the pouch type battery cell 111, it is provided in a flat shape as a whole, and the thickness value of the sealing part formed by heat sealing is also small. Therefore, for convenience of explanation, it is described that the battery cell 110 has two surfaces corresponding to the housing part and four edges located outside the housing part.

The battery cell 111 may comprise an electrode lead 112 for electrically connecting with a conductive member. The electrode lead 112 may be located to protrude in one direction from one edge of the cell case. One end of the electrode lead 112 is located inside the battery cell 111 to be electrically connected to a cathode or an anode of the electrode assembly, and the other end of the electrode lead 112 may be exposed to the outside of the battery cell 111 to be electrically connected to a separate member, for example, a busbar. The electrode lead 112 may be formed in two, and the two electrode leads 112 may be respectively located at both ends in the longitudinal direction (X-axis direction) of the battery cell 111. One of the two electrode leads 112 may be a cathode lead, and the other may be an anode lead.

Meanwhile, the battery cell 111 housed in the cell cover 113 may be formed in plural numbers. The plurality of battery cells 111 can be stacked in one direction to form a cell stack. Here, the side surface of the cell stack may refer to one surface of the outermost battery cell 111 among the plurality of battery cells 111. Further, the upper surface and the lower surface of the cell stack may be surfaces on which edges of the battery cells 111 are arranged side by side, and the front surface and the rear surface of the cell stack may be surfaces where the electrode leads 112 of the battery cells 111 are located. Each surface of the cell stack may correspond to each surface of the cell unit 110.

The cell cover 113 can serve to cover at least a part of an outer surface of the battery cell 111. The cell cover 113 covers a part of the battery cell 111, and the other part is exposed toward the pack case 1100, thereby capable of improving cooling efficiency of the battery pack 1000 and guiding the gas generated from the battery cells 111 in a predetermined direction.

The cell cover 113 may cover two surfaces facing each other and one surface sharing a corner with the two surfaces of the cell stack. The cell cover 113 may cover two side surfaces and an upper surface of the cell stack. The cell cover 113 may cover a side surface of the battery cell 111 arranged on the outermost side and one edge of the battery cells 111.

The cell cover 113 has a second surface 113b and a third surface 113c, which are located in parallel to each other and spaced apart from each other, and a first surface 113a extending between the second surface 113b and the third surface 113c. The second surface 113b and the third surface 113c may correspond to the side surfaces of the cell unit 110. The first surface 113a may correspond to the upper surface of the cell unit 110.

One edge of the first surface 113a may be connected to one edge of the second surface 113b, and the other edge of the first surface 113a may be connected to one edge of the third surface 113c. Alternatively, the second surface 113b may be described as extending in the first direction from one edge of the first surface 113a, and the third surface 113c may be described as extending in the first direction from the other edge of the first surface 113a. At this time, the first direction is a direction substantially perpendicular to the first surface 113a, which is indicated as a -Z axis direction in the drawing. Like this, the cross section of the cell cover 113 may be n-shaped, wherein the cross section may refer to a cross section in the longitudinal direction (X-axis direction) of the cell cover 113.

The second surface 113b and the third surface 113c of the cell cover 113 may be formed flat. The first surface 113a of the cell cover 113 may be formed flat. The n-shaped cell cover 113 may be formed by bending one plate material in the same direction. A method such as a press or roll forming may be applied to this bending process. However, the cell cover 113 does not necessarily have to be provided integrally, and the cell cover 113 can also be formed by connecting a plurality of plate materials.

The cell cover 113 may cover one surface of the battery cell 111. Here, a plurality of battery cells 111 may be housed in the cell cover 113 as in the present embodiment, and the second surface 113b and the third surface 113c may cover one surface of the outermost battery cell 111 among the plurality of battery cells 111.

The second surface 113b and the third surface 113c of the cell cover 113 may be located in parallel to one surface of the battery cell 111. More specifically, as shown in FIG. 5, the second surface 113b may cover one surface of the outermost battery cell 111 on the left side (+Y axis) of the plurality of battery cells 111 from the left side. The third surface 113c may cover one surface of the outermost battery cell 111on the right side (-Y axis) of the plurality of battery cells 111 from the right side.

The cell cover 113 may cover one edge of the battery cell 111. The first surface 113a of the cell cover 113 may cover at least a part of one edge of the battery cell 111. The cell cover 113 may cover an upper side edge of the battery cell 111 vertically arranged such that one edge corresponds to the bottom surface 1110 of the pack case 1100. The first surface 113a of the cell cover 113 may correspond to the upper side edge of the battery cell 111 in an upright state. One edge of the battery cell 111 corresponding to the bottom surface 1110 of the pack case 1100 may be a portion where an unsealed part is formed.

The cell cover 113 may separate the battery cell 111 housed therein from adjacent battery cells 111, so that the gas generated in the battery cell 111 can be interrupted from moving to the adjacent battery cell 111. Further, since the cell cover 113 is in contact with or disposed close to one surface of the battery cell 111, the heat generated in the battery cell 111 can be transferred to the cell cover 113, thereby promoting heat dissipation of the battery cell 111. Moreover, when the lower side edge of the cell cover 113 is arranged to contact the pack case 1100, a heat transfer path moving to the battery cell 111, the cell cover 113, and the pack case 1100 can be formed, the overall cooling efficiency of the battery pack 1000 may be improved. Here, the lower side edge of the cell cover 113 may refer to edges located on the -Z axis on the second surface 113b and the third surface 113c.

The cell cover 113 may not cover the lower side edge corresponding to the bottom surface 1110 of the pack case 1100 in the vertically arranged battery cells 111, and the lower side edge of the battery cell 111 can be exposed toward the bottom surface 1110. Thereby, the battery cell 111 is in contact with or located close to the bottom surface 1110 of the pack case 1100, so that heat generated from the battery cells 111 can be quickly discharged to the bottom surface 1110 of the pack case 1100. At this time, when the cooling member is located on the bottom surface 1110 of the pack case 1100, the heat dissipation effect can be further improved.

Meanwhile, an adhesive may be provided between the battery cell 111 and the pack case 1100 so that the battery cell 111 can be stably located in the pack case 1100. More specifically, an adhesive may be interposed between one edge of the battery cell 111 and the bottom surface 1110 of the pack case 1100. At this time, one edge of the battery cell 111 provided with the adhesive may be an unsealed part. Examples of the adhesive include a thermally conductive resin, TIM, and the like, and any known material can be applied as long as it is a material having thermal conductivity or adhesiveness. In addition, such an adhesive may be provided between the cell cover 113 and the pack case 1100 or between the battery cells 111 and the cell cover 113 to strengthen the structure of the battery pack 1000.

Further, in the battery pack 1000 of the present embodiment, each battery cell 111 is provided with a cell cover 113, so that a module case for protecting the modularized battery cells 111 can be omitted, and the battery cell 111 can be directly seated and housed inside the pack case 1100 without a module case. In the case of a pouch type battery cell, the cell case is made of a soft material, and thus, tends to be vulnerable to external impact and have low hardness. Therefore, it may not be easy to house the battery cell by itself in the inside of the pack case 1100 without housing it in the module case. However, in the present embodiment, since the cell cover 113 supplements the stiffness of the battery cell 111, the battery cells 111 can be directly housed inside the pack case 1100, and can be maintained in a stacked state. Further, since the cell cover 113 makes it possible to omit conventional module cases, stacking frames, and fastening members such as bolts, the manufacturing process can be simplified, the internal structure can be simplified, and energy density can be improved accordingly.

The stiffness of the battery cell 111 is supplemented by the cell cover 113 in this way, so that the handling of the battery cell 111 can also be facilitated in the process of assembling the battery pack 1000. More specifically, by gripping the cell cover 113 coupled with the battery cell 111 in the process of housing the battery cell 111 in the pack case 1100, the assembling process can be performed more easily.

The cell cover 113 can be made of a material having a high melting point so that it does not melt even during thermal runaway inside the battery pack 1000. Further, the cell cover 113 can be made of a material having a mechanical strength greater than a predetermined range so as to stably support the battery cell 111, so that the battery cell 111 can be protected from external impacts and the like. Examples of the materials used for the cell cover 113 include steel, stainless steel (SUS), and the like.

On the other hand, the cell cover 113 not only delays a thermal runaway phenomenon but also supplement the stiffness of the battery cell 111, thereby allowing the battery cell 111 to maintain in an upright state. The cell cover 113 can cover at least a part of the battery cell 111, thereby supporting the battery cell 111 and stably maintaining the stacked state of the battery cells 111 arranged upright in one direction. More specifically, the second surface 113b and the third surface 113c of the cell cover 113 can support the side surfaces of the cell stack, thereby maintaining the upright state of the battery cell 111. Further, the lower edge of the cell cover 113 can be seated on the bottom surface 1110 of the pack case 1100, thereby allowing the cell cover 113 to stand on its own and maintaining the upright state of the battery cells 111 inside the cell cover 113.

On the other hand, according to the embodiment, a coupling groove may be formed on the bottom surface 1110 of the pack case 1100. The lower side edge of the cell cover 113 may be inserted into the coupling groove and fixed to the bottom surface 1110. The cell cover 113 and the bottom surface 1110 of the pack case 1100 are coupled through the coupling groove in this way, so that the cell cover 113 can be more stably seated on the pack case 1100, and the upright state of the battery cell 111 can be maintained. Further, by guiding the position of the cell cover 113, the cell cover 113 can be assembled more easily, movement of the cell cover 113 is prevented, and widening between the second surface 113b and the third surfaces 113c of the cell cover 113 can prevented. Here, the coupling groove may be formed to extend along the longitudinal direction (X axis) of the pack case 1100, and the length of the coupling groove may be similar to or greater than the length of the cell cover 113.

As shown in FIG. 5, the cell cover 113 may be coupled to cover the battery cell 111 at an upper side of the battery cell 111. Here, a thermally conductive resin having adhesive properties may be provided between the cell cover 113 and the battery cell 111, but this is not necessarily the case. The other material may not be interposed between the cell cover 113 and the battery cell 111. This can sever to minimize the volume of the cell cover 113 to maximize the number of battery cells 111 housed inside the pack case 1100 and the battery cell 111, thereby maximizing the energy density of the battery pack 1000.

In the present embodiment, the cell cover 113 is illustrated as covering three battery cells 111, but this is not necessarily the case, and the cell cover 113 can be designed to cover 4 or more, or 2 or less battery cells 111 according to the designer's intention.

In the present embodiment, the cell covers 113 are described as being provided for all battery cells 111, but this is not necessarily the case, and the cell cover 113 can also be provided only on some of the plurality of battery cells 111.

The cell cover 113 of the present embodiment is described as having an n-shape, but it can be configured in other shapes as long as it can achieve the purpose of preventing gas or the like from transferring to the electrode leads 112 and other electrical members. For example, the cell cover may be formed in a ' o' shape, a 'U' shape, an 'O' shape, an 'L' shape, and the like.

Meanwhile, although not specifically illustrated, the cell cover 113 of the present embodiment may be provided with a clamping member. The clamping member can clamp between the different end parts of the cell covers 113 to prevent them from being space apart or deformed. For example, the clamping member can be provided at the lower end of the cell cover 113 where the lower side edge of the battery cell 111 is located, and prevent the second surface 113b and the third surface 113c from being spaced apart, thereby being able to maintain the housing state of the battery cell 111. As a specific example, the clamping member may be a tape. As another specific example, the clamping member may be a metal material having elasticity.

Referring to FIGS. 4 and 5 again, the cell cover 113 may be formed with a venting hole 114. The venting hole 114 can serve to discharge gas generated in the battery cell 111 housed inside the cell cover 113 to the outside of the cell cover 113.

Here, the venting hole 114 may be formed on one surface of the cell cover 113 that does not correspond to the electrode lead 112 of the battery cell 111. As a specific example, the venting hole 114 may be formed on the first surface 113a of the cell cover 113.

The venting holes 114 may be formed in plural numbers, and the plurality of venting holes 114 may be spaced apart from each other.

Conventionally, when ignition occurs in the battery cell 111, gas, sparks and the like move in the direction of the electrode lead 112, thereby causing a problem that additional thermal runaway phenomenon is generated. However, in the present embodiment, the venting holes 114 are formed in the cell cover 113, thereby minimizing movement of gas and spark in the direction where the electrode lead 112 is located. The venting hole 114 allows the gas discharge path to be spaced apart from the electrode lead 112, and prevent the electrode lead 112 and electrical components connected thereto from being damaged by gas, sparks, flames or the like.

The cell cover 113 may be provided with a cell unit fastening hole 115 into which the fixing unit 140 is inserted. The plurality of cell units 110 are coupled through the cell unit fastening hole 115 and the fixing unit 140, thereby restricting a relative movement and stably positioning them inside the pack case 1100.

The cell unit fastening hole 115 may be formed on one surface of the cell cover 113 facing one surface of the battery cell 111. The cell unit fastening holes 115 may be respectively formed on the second surface 113b and the third surface 113c, and the cell unit fastening hole 115 formed on the second surface 113b and the cell unit fastening hole 115 formed on the third surface 113c may be located on the same axis. On the other hand, since the fixing unit 140 should not damage the battery cell 111, the position of the cell unit fastening hole 115 into which the fixing unit 140 is inserted may be spaced apart from the portion corresponding to the battery cell 111 in the cell cover 113. As a specific example, the cell unit fastening hole 115 may be located at an upper end part in the longitudinal direction (X-axis direction) of the cell cover 113.

The busbar frame 116 may serve to electrically connect the battery cell 111 covered by the cell cover 113 with an external conductive member or an adjacent battery cell 111. The busbar frame 116 may be configured to support the electrode lead 112 of at least one battery cell 111, and electrically connect the electrode lead 112 of the above-mentioned battery cell 111 with the electrode lead 112 of the adjacent battery cell 111.

The busbar frame 116 may comprise a busbar made of an electrically conductive material such as copper and a busbar housing made of a plastic material such as PC. As a specific example, a busbar terminal is located on one surface of the busbar housing, and the other surface of the busbar housing may face the battery cells 111. The electrode leads 112 of the battery cells 111 may pass through slots provided in the busbar housing and contact the busbar. A welding process or the like is applied to one surface where the electrode lead 112 and the busbar overlap, thereby being able to couple the electrode lead 112 and the busbar. Thereby, an electrical connection can be formed between the electrode lead 112 and the busbar.

The busbar frame 116 may be coupled with the cell cover 113. The busbar frame 116 may be coupled to an end part in the longitudinal direction (X-axis direction) of the cell cover 113. The end part in the longitudinal direction (X-axis direction) of the cell cover 113 may be in an open state, and the opened end part may be covered by a busbar frame 116. The busbar frames 116 may be formed in two, and each may be disposed at an end part in the longitudinal direction (X-axis direction) of the cell cover 113.

One surface of the busbar frame 116 may face the battery cell 111, and may be housed inside the cell cover 113. A part of the busbar frame 116 including one surface thereof may be located between the second surface 113b and the third surface 113c of the cell cover 113, so that a part of the busbar frame 116 can correspond to at least a part of the cell unit fastening holes 115 formed on the second surface 113b and the third surface 113c. Therefore, the busbar frame 116 may be formed with a busbar frame groove 117 so that a part of the busbar frame 116 does not hinder movement of the fixing unit 140 penetrating through the cell cover 113.

The busbar frame groove 117 can guide the position of the fixing unit 140 between the second surface 113b and the third surface 113c. The busbar frame groove 117 may be formed to correspond to the fixing unit 140. An inner peripheral surface of the busbar frame groove 117 may have a shape corresponding to an outer peripheral surface of the fixing unit 140. The busbar frame groove 117 may not be limited by its shape as long as it can correspond to the outer peripheral surface of the fixing unit 140. The busbar frame groove 117 may be in the form of a hole, or may be formed in a shape in which one surface facing the battery cell 111 is depressed toward the other surface. As a specific example, the busbar frame groove 117 may be formed to have a semicircular cross section, or may be formed in a circular shape in which a circumference angle is larger or smaller than that of a semicircle.

On the other hand, a circular groove 116a may be formed on the lower surface (a surface on the -Z axis) of the busbar frame 116. The circular groove 116a of the busbar frame 116 may correspond to a jig used in a charging/discharging process of the battery cell 111. A pin of the jig may be electrically connected to the busbar or the electrode lead 112 through the circular groove 116a, thereby applying voltage to the battery cell 111 during charging/discharging process.

In addition, an escape part 136a may be formed at one corner of the cover support part 136 of the end cover 130 so as not to cover the circular groove 116a formed on the lower surface of the busbar frame 116. The shape of the escape part 136a may include a semicircular shape. As shown in FIG. 3, the shape of the escape part 136a may be a shape in which a plurality of semicircles are arranged successively. Each semicircle of the escape part 136a may correspond to the circular groove 116a of the busbar frame 116, respectively.

The insulating cover 118 can serve to prevent the electrode lead 112 of the battery cell 111 housed in the cell cover 113 from being short-circuited. For this purpose, the insulating cover 118 may be made of a polymer synthetic resin having insulating properties.

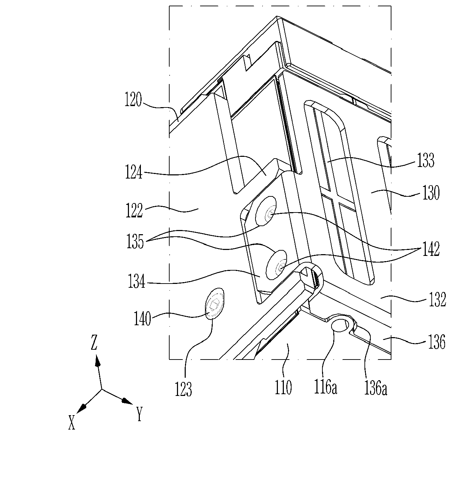

FIG. 6 is an enlarged view of a section P1 of FIG. 2.

Referring to FIG. 6, the fixing unit 140 of the present embodiment may be inserted into the plate fastening hole 123 of the support plate 120, so that the support plate 120 and the cell unit 110, or the cell unit 110 and the adjacent cell unit 110 can be stably coupled. Further, the second fixing unit 142 may be inserted into the cover fastening hole 135 of the end cover 130 and the second plate fastening hole 125 of the support plate 120, so that the support plate 120 and the end cover 130 can be stably coupled. The second plate fastening hole 125 may be located closer to the terminal end in the longitudinal direction (X-axis direction) of the support plate 120 than the plate fastening hole 123. This can be preventing the cover extension part 134 of the end cover 130 corresponding to a part of the support plate 120 from being unnecessarily long.

Meanwhile, the end cover 130 may comprise a cover support part 136 extending vertically from the other edge of the body part 132 to support a part of the cell unit 110. The cross-sectional shape in the longitudinal direction (Y-axis direction) of the end cover 130 may be L-shaped due to the cover support part 136.

The cover support part 136 may be formed at one edge corresponding to the bottom surface 1110 of the pack case 1100 among the edges of the body part 132. The cover support 136 may be formed at a lower side edge of the body part 132. The cover support 136 may have a shape extending perpendicularly to one surface of the body part 132 from the lower side edge of the body part 132. Thereby, at least a part of the lower surfaces of the cell units 110 located on the bottom surface 1110 can be covered and protected by the cover support part 136.

As shown in FIG. 6, the end cover 130 can cover end parts of lower surfaces of the plurality of cell units 110, in addition to the front surface or the rear surface of the plurality of cell units 110, that is, the portion where the busbar terminal is located. Since the cell cover 113 included in the cell unit 110 is in a state where the lower surface corresponding to the bottom surface 1110 of the pack case 1100 is omitted, a lower side edge of the cell cover 113 may be exposed to the outside. Therefore, the lower surface of the battery assembly 100 is in a state in which the end parts of the plurality of second surfaces 113b and third surfaces 113c are exposed, so that the end parts of the second surface 113b and the third surface 113c can interfere with other members during the process of assembling the battery assembly 100 and then mounting it the pack case 1100. However, the end cover 130 partially protects the end parts of the second face 113b and the third face 113c through the cover support 136, thereby capable of minimizing such problems. In addition, the cover support 136 supports the plurality of cell units 110 located in an upright state, thereby capable of supplementing the stiffness of the battery assembly 100.

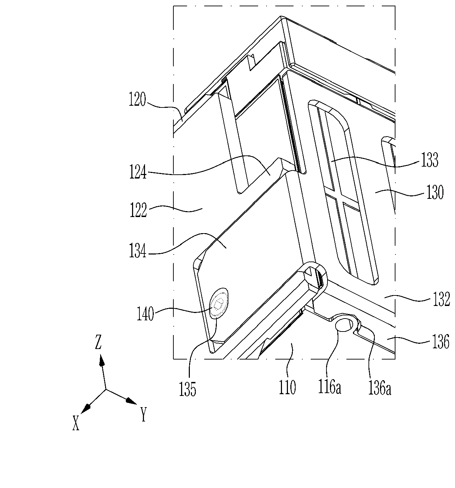

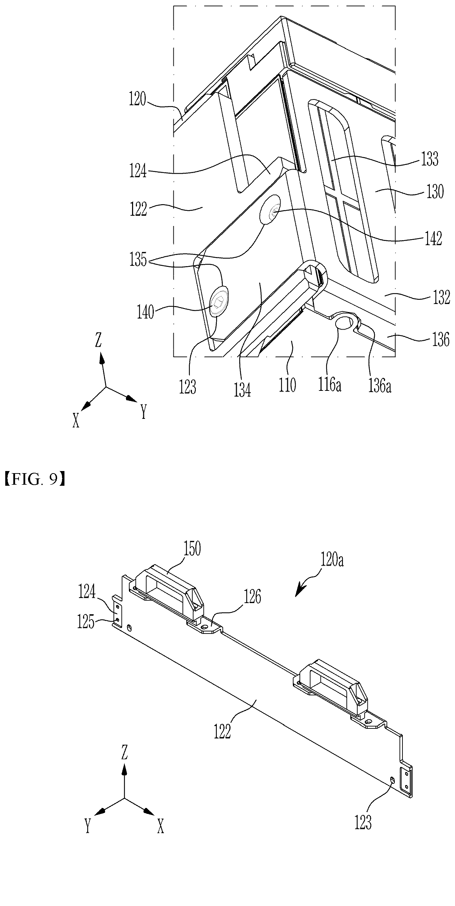

FIGS. 7 and 8 are modifications of a battery assembly according to an embodiment of the present invention.

Referring to FIGS. 7 and 8, the end cover 130 of the battery assembly 100 according to the modification may be coupled to the support plate 120 by the fixing unit 140. According to this modification, the second fixing unit 142 may be omitted, and thereby, the end cover 130, the support plate 120, and the plurality of cell units 110 can be coupled together by the fixing unit 140.

In this modification, the cover fastening hole 135 of the cover extension part 134 may correspond to the plate fastening hole 123 of the support plate 120. When the cover fastening hole 135, the plate fastening hole 123, and the cell unit fastening hole 115 of the cell unit 110 are arranged on the same axis, the fixing unit 140 can penetrate through the above-mentioned coupling holes, so that a plurality of members can be coupled together. Not only the cell unit 110 and the support plate 120 but also the end cover 130 are coupled by the fixing unit 140 in this way, so that the manufacturing process can be quickly and easily completed. In addition, the manufacturing process is simplified, and members such as the second fixing unit 142 are omitted, thereby capable of reducing costs.

On the other hand, as illustrated, the cover extension part 134 of the end cover 130 may have a shape that extends longer so as to correspond to the plate fastening hole 123 of the support plate 120. However, in order to prevent the cover extension part 134 from extending unnecessarily, the plate fastening holes 123 on the support plate 120 and the cell unit fastening holes 115 of the cell cover 113 can also be moved closer to the terminal end part in the longitudinal direction (X-axis direction).

On the other hand, for more stable coupling between the end cover 130 and the support plate 120, the end cover 130 and the support plate 120 may be further coupled by a second fixing unit 142 in addition to the fixing unit 140 as shown in FIG. 8. The end cover 130 is primarily fixed by the fixing unit 140, and the end cover 130 is doubly fixed by the second fixing unit 142 in the future, thereby capable of minimizing detachment of the end cover 130 from the support plate 120. In addition, when the end cover 130 is fixed only by the second fixing unit 142 as shown in FIG. 6, the end cover 130 is easily spaced apart from the support plate 120 in the process of inserting the second fixing unit 142, which may make it difficult to arrange coupling holes on the same axis. However, when the end cover 130 is first fixed to the support plate 120 by the fixing unit 140 as shown in FIG. 8, the insertion of the second fixing unit 142 may be easier.

Meanwhile, FIG. 8 shows that the second fixing unit 142 is provided in one, but unlike the same, the second fixing units 142 may be provided in two or more. When the second fixing units 142 are provided in plural numbers, the effect of preventing the detachment of the end cover 130 is improved, but the complexity of the process increases, and so it cannot be said that simply increasing the number of second fixing units 142 is advantageous.

In this manner, two or more cover fastening holes 135 may be formed in the cover extension part 134, one of the two cover fastening holes 135 corresponds to the fixing unit 140, and the other may correspond to the second fixing unit 142. At this time, one of the two cover fastening holes 135 may correspond to the plate fastening hole 123, and the rest may correspond to the second plate fastening hole 125.

Meanwhile, the handle coupling part 126 of this embodiment may be provided in a form different from that described above.

FIG. 9 is another modification of a battery assembly according to an embodiment of the present invention.

Referring to FIG. 9, the handle coupling part 126 may extend perpendicularly to one surface of the support part 122 from one edge of the support part 122. The handle coupling part 126 may extend perpendicularly to one surface of the support part 122 toward the outside of the support part 122. One surface of the handle coupling part 126 may be seated on the cross beam 1200, so that the battery assembly 100 can be stably located. At this time, the handle unit 150 may be coupled to the other surface of the handle coupler 126. As compared with the shape of the handle coupling part 126 illustrated in FIGS. 2 and 3, the handle coupling part 126 illustrated in

FIG. 9 can be formed to have a larger coupling surface with the handle unit 150. Thereby, when the handle coupling part 126 of FIG. 9 is provided, attachment and detachment from the handle unit 150 can be more facilitated.

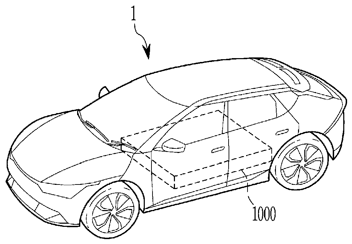

FIG. 10 is a diagram showing a state in which a battery pack according to an embodiment of the present invention is mounted on a vehicle.

Referring to FIG. 10 , the battery pack 1000 described above can be mounted on a vehicle. In this manner, the battery pack of the present embodiment can be applied to a vehicle means such as an electric bicycle, an electric vehicle, or a hybrid vehicle, but the present disclosure is not limited thereto, and can be applied to various devices capable of using the battery module and battery pack including the battery pack.

Meanwhile, in the present embodiment, the battery assembly 100 has been described in a state where the case is removed, but the battery assembly 100 can be provided to the battery pack in a state where a separate case is provided. In addition, the battery assembly 100 of this embodiment can also be applied to a battery module housed in a rack of an ESS (Energy Storage System).

Although the invention has been described in detail above with reference to preferred embodiments thereof, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

1000: battery pack
1100: pack case
1200: cross beam
100: battery assembly
110: cell unit
111: battery cell
113: cell cover
116: busbar frame
118: insulating cover
120: support plate
130: end cover
140: fixed unit
142: second fixing unit
150: handle unit

## Claims

1. A battery pack comprising:
a battery assembly including a plurality of cell units arranged side by side in one direction, and
a pack case that houses the battery assembly in an inner space,
wherein the cell unit includes at least one battery cell and a cell cover covering a part of the battery cell, and
wherein the battery assembly penetrates through the cell cover to thereby restrict a relative movement of the plurality of cell units.

2. The battery pack of claim 1, wherein:
the cell cover is formed with a cell cover fastening hole, and
the fixing unit penetrates through the cell cover fastening hole to thereby fix the plurality of cell units.

3. The battery pack of claim 1, wherein:
the battery cells are vertically arranged so that one edge corresponds to the bottom surface of the pack case, and
the cell cover covers an upper side edge of the vertically arranged battery cell, and the lower side edge of the battery cell is opened.

4. The battery pack of claim 1, wherein:
the cell cover includes a second surface and a third surface arranged in parallel to one surface of the battery cell, and a first surface extending between the second surface and the third surface, and
a cross section of the cell cover has an n-shape.

5. The battery pack of claim 4, wherein:
the second surface and the third surface are formed with a cell unit coupling hole into which the fixing unit is inserted.

6. The battery pack of claim 1, wherein:
the cell unit further comprises a busbar frame coupled to an end part in the longitudinal direction of the cell cover, and
an electrode lead of the battery cell housed in the cell cover is electrically connected to a busbar mounted on the busbar frame.

7. The battery pack of claim 6, wherein:
one surface of the busbar frame is formed with a busbar frame groove, and
the shape of the busbar frame groove corresponds to the shape of the outer peripheral surface of the fixing unit.

8. The battery pack of claim 1, wherein:
the battery assembly includes a support plate in contact with one surface of an outermost cell unit among the plurality of cell units, and
the fixing unit penetrates through the support plate to thereby restrict a relative movement between the plurality of cell units and the support plate.

9. The battery pack of claim 8, wherein:
the support plate is formed with a plate fastening hole,
the cell cover is formed with a cell cover fastening hole, and
the fixing unit penetrates through the plate fastening hole and the cell cover fastening hole to thereby couple the plurality of cell units and the support plate.

10. The battery pack of claim 8, wherein:
the battery assembly further comprises an end cover located at an end part in a longitudinal direction of the plurality of cell units, and
the end cover is coupled to the support plate.

11. The battery pack of claim 9, wherein:
the end cover comprises a body part covering end parts in the longitudinal direction of the plurality of cell units, and a cover extension part extending from one edge of the body part toward the support plate, and
the cover extension part corresponds to an end part in the longitudinal direction of the support plate.

12. The battery pack of claim 11, wherein:
the fixing unit penetrates through the cover extension part to thereby couple the end cover and the support plate.

13. The battery pack of claim 12, wherein:
the cell cover is formed with a cell cover fastening hole,
the support plate is formed with a plate fastening hole,
the cover extension part is formed with a cover fastening hole,
the fixing unit penetrates through the cell cover fastening hole, the plate fastening hole, and the cover fastening hole to thereby couple the plurality of cell units, the support plate, and the end cover.

14. The battery pack of claim 11, wherein:
the battery assembly further comprises a second fixing unit, and
the cover extension part and an end part of the support plate are fixed by the second fixing unit.

15. The battery pack of claim 14, wherein:
the support plate is formed with a second plate fastening hole,
the cover extension part is formed with a cover fastening hole, and
the second fixing unit penetrates through the second plate fastening hole and the cover fastening hole to thereby couple the end cover and the support plate.

16. The battery pack of claim 11, wherein:
the support plate is formed with a cover coupling part at a position corresponding to the cover extension part, and
an outer surface of the cover coupling part and an inner surface of the cover extension part are arranged to contact each other.

17. The battery pack of claim 16, wherein:
the outer surface of the cover coupling part has a shape recessed toward the inner surface, and
an inner surface of the cover extension part is disposed on an outer surface of the recessed cover coupling part.

18. The battery pack of claim 11, wherein:
the end cover comprises a cover support part extending from one edge of the body part toward a lower surface of the cell unit.

19. The battery pack of claim 1, wherein:
the cell cover is formed by bending one plate material.

20. A device comprising the battery pack of claim 1.
